Europäisches Patentamt

European Patent Office

Office européen des brevets

(19)

(11) **EP 0 919 833 B1**

(12) **FASCICULE DE BREVET EUROPEEN**

(45) Date de publication et mention
de la délivrance du brevet:
**26.01.2005 Bulletin 2005/04**

(51) Int Cl.[7]: **G01S 13/02**, G01V 3/12

(21) Numéro de dépôt: **98402924.9**

(22) Date de dépôt: **24.11.1998**

(54) **Dispositif de detection d'objets enfouis notamment de mines**

Vorrichtung zum Entdecken von verdeckten Gegenständen, insbesondere Minen

Device for detecting concealed objects, especially mines

(84) Etats contractants désignés:
**DE FR GB IT NL SE**

(30) Priorité: **28.11.1997 FR 9715010**

(43) Date de publication de la demande:
**02.06.1999 Bulletin 1999/22**

(73) Titulaire: **Thales**
**92200 Neuilly Sur Seine (FR)**

(72) Inventeurs:
• **Parizet, Stéphane**
**94117 Arcueil Cedex (FR)**
• **Chekroun, Claude**
**94117 Arcueil Cedex (FR)**

(56) Documents cités:
• **D'ERRICO M S ET AL: "SUBSURFACE MICROWAVE IMAGING FOR NONDESTRUCTIVE EVALUATION OF CIVILSTRUCTURES" IMAGE AND MULTIDIMENSIONAL SIGNAL PROCESSING, MINNEAPOLIS, APR. 27 - 30, 1993, vol. VOL. 5, no. -, 27 avril 1993, pages 453-456, XP000437707 INSTITUTE OF ELECTRICAL AND ELECTRONICS ENGINEERS**
• **PETERS L ET AL: 'GROUND PENETRATING RADAR AS A SUBSURFACE ENVIRONMENTAL SENSING TOOL' PROCEEDINGS OF THE IEEE vol. 82, no. 12, 01 Décembre 1994, pages 1802 - 1822, XP000492722**

## Description

La présente invention concerne un dispositif de détection d'objets enfouis. Elle s'applique notamment pour la détection de tous types de mines. Plus généralement elle s'applique pour la détection d'objets dangereux enfouis dans le sol tels que, par exemple, outre des mines, toutes sortes de munitions qui n'ont pas encore explosé.

La prolifération des mines, notamment antipersonnel, pose un problème majeur de protection des personnes, et cela jusqu'à longtemps après la fin de conflits. Ces mines sont généralement d'un très bas coût, à la fois en ce qui concerne leur fabrication et leur pose, ce qui facilite évidemment leur prolifération de par le monde.

Des détecteurs de mines existent. Ils sont basés sur des techniques radars connues par exemple du type GPR selon l'expression anglo-saxonne « Ground Penetrating Radar » ou du type SPR selon l'expression anglo-saxonne « Surface Penetrating Radar ». Le principe de détection d'objets enfouis dans le sol par des techniques radar consiste à envoyer une onde hyperfréquence en direction du sol, puis d'analyser l'onde réfléchie. Les caractéristiques requises pour l'onde hyperfréquence émise dépendent notamment du type d'objet à détecter, en ce qui concerne par exemple ses dimensions et son camouflage. Ces caractéristiques peuvent dépendre encore de la profondeur à laquelle il est enterré ainsi que de la nature du terrain. La dimension principale d'une mine, vue en dessus, peut varier d'environ 30 cm pour les mines antichar jusqu'à environ 10 cm, voire moins, pour les mines antipersonnel. En ce qui concerne leur localisation, elles sont en général enterrées à une profondeur allant d'environ 0 cm, pour les mines disposées en surface, jusqu'à 20 cm, voire 50 cm pour d'autres types d'enfouissement. Le sol peut être de tous types.

Les mines antipersonnel sont généralement enterrées très peu profond. Or, la zone du sol proche de la limite de l'air peut présenter une grande permittivité diélectrique, et cela notamment à cause de l'humidité due à l'environnement ou encore des matières recouvrant le sol. Ainsi, la permittivité diélectrique de la zone où est enfouie une mine peut aller de 2,5 à 25, et même plus pour les sols qui regorgent d'eau. Une mine en plastique par exemple qui ne possède pas une permittivité infinie, et même dans certains cas une mine qui comporte du métal, devient alors difficile à détecter par manque de différenciation entre sa propre permittivité et celle de l'environnement.

Si l'on considère une mine antipersonnel qui présente par ailleurs de faibles dimensions, l'exigence de résolution doit être de l'ordre par exemple de 1,5 cm, ce qui correspond environ au tiers de l'épaisseur de la mine. Avoir une longueur d'onde dans le sol inférieure ou égale aux dimensions de la mine est un avantage certain pour la détection. Une fréquence d'émission élevée est alors nécessaire. Or, aux hautes fréquences, les ondes émises s'atténuent de façon significative dans les sols notamment humides à cause des pertes diélectriques dues à la haute permittivité.

De plus, il convient encore de noter que la SER (Surface Equivalente Radar) de la mine vue par le radar dépend de l'orientation de cette mine dans le sol. Il suffit que cette dernière soit par exemple penchée par la volonté des poseurs ou par suite d'un accident de terrain, et que sa SER vue par le radar, situé approximativement à la verticale, soit réduite. La détection s'en trouve encore plus difficile.

Il apparaît donc que la détection des mines par des techniques radar est délicate à mettre en oeuvre et peut souffrir d'un manque de fiabilité. Or, la détection des mines doit être la plus sûre possible. Le taux de détection doit s'approcher au maximum des 100%. Par ailleurs, la quantité considérable de mines dispersées dans le monde suppose que les détecteurs puissent être utilisés notamment sans contraintes de prix. Il est en effet à noter que la plupart des pays touchés par le fléau des mines ont de faibles revenus.

Le but de l'invention est notamment de permettre la réalisation d'un détecteur ayant un taux de détection le plus élevé possible tout en étant de faible coût. A cet effet, l'invention a pour objet un détecteur d'objets enfouis, caractérisé en ce qu'il comporte au moins un réseau d'antennes en croix, une branche ne comportant que des antennes d'émission et une branche ne comportant que des antennes de réception, les antennes d'émission émettant successivement et les antennes de réception captant les signaux réfléchis par un objet après chaque émission d'une antenne pour former une image en trois dimensions de l'objet.

L'invention a notamment pour principaux avantages qu'elle permet aux utilisateurs de bien appréhender l'environnement en complément des facilités apportées par les fonctions radar, qu'elle permet de détecter une très grande variété d'objets avec un même dispositif et qu'elle est de faible poids.

D'autres caractéristiques et avantages de l'invention apparaîtront à l'aide de la description qui suit faite en regard de dessins annexés qui représentent :

- la figure 1, un exemple de dispositif de détection selon l'art antérieur ;
- la figure 2, un objet, par exemple une mine, enfoui dans le sol en position penchée ;
- les figures 3a et 3b, un réseau d'antennes plan permettant de reconstituer un objet en trois dimensions ;
- la figure 4, une illustration du principe de réalisation d'un dispositif de détection selon l'invention ;
- la figure 5, un mode de réalisation possible d'un dispositif selon l'invention ;
- la figure 6, un mode de maintien possible du réseau en croix d'un dispositif selon l'invention ;
- la figure 7, un exemple de réalisation possible d'un dispositif selon l'invention permettant d'accroître la bande de fréquences de détection ;

- la figure 8, un exemple de réalisation possible d'un dispositif selon l'invention comportant plusieurs réseaux en croix.

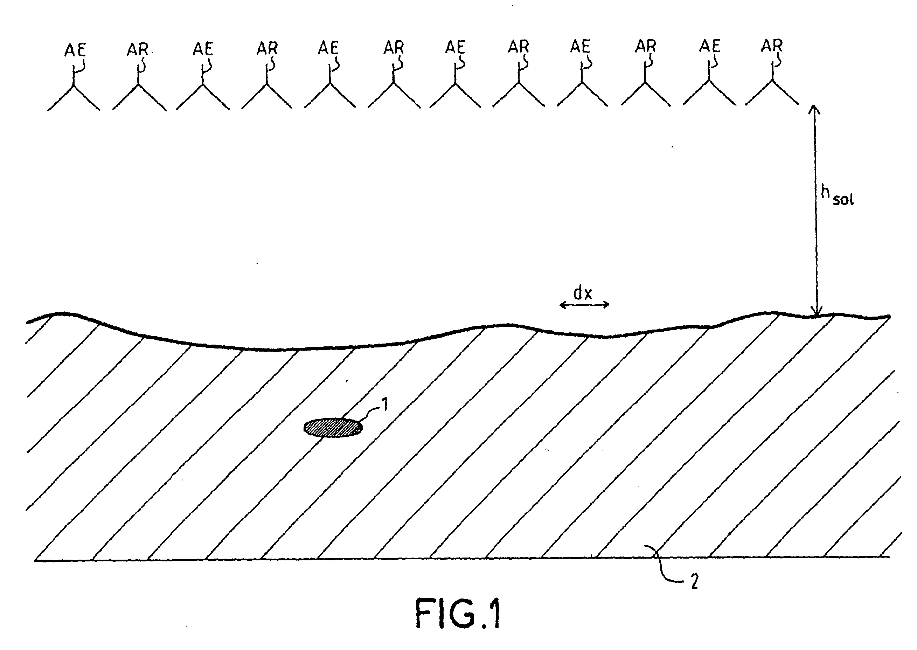

La figure 1 présente un dispositif de détection selon l'art antérieur, fonctionnant selon des techniques radar. Un objet 1, par exemple une mine, enfoui dans le sol 2 doit être détecté. Un réseau d'antennes AE, AR linéaire émet un signal vers le sol 2. Dans l'exemple de réalisation représenté, le réseau est monostatique et comporte autant d'antennes d'émission AE que d'antennes de réception AR, intercalées. Un autre mode de réalisation peut comporter par exemple une seule antenne d'émission AE, située au milieu des antennes de réception AR, il s'agit alors d'une configuration multistatique. La ou les antennes d'émission AE envoient vers le sol une onde hyperfréquence. Le module de traitement du détecteur, non représenté, traite les impulsions réfléchies par l'objet 1 et captées par les antennes de réception AR, pour fournir une image en deux dimensions de l'objet 1 détecté. La résolution horizontale dx est donnée par les relations suivantes :

$$dx = \frac{\lambda . h_{sol}}{2.L} \qquad (1),$$

dans le cas monostatique,

$$dx = \frac{\lambda . h_{sol}}{L} \qquad (2),$$

dans le cas multistatique,
où

$\lambda$     représente la longueur de l'onde émise vers l'objet,

$h_{sol}$     représente la distance des antennes AE, AR au sol,

L     représente la longueur équivalente du réseau d'antennes.

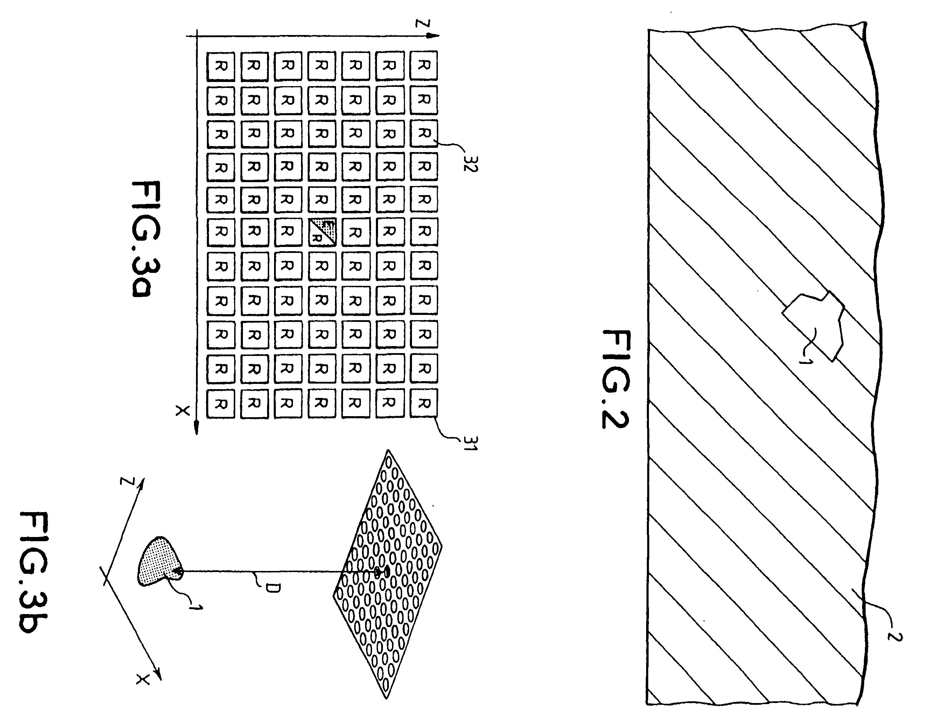

Comme il a été indiqué précédemment, cette résolution peut être insuffisante pour assurer une détection fiable d'objets tels que notamment des mines. En particulier lorsque, comme l'illustre la figure 2, la mine est penchée, volontairement ou suite aux conditions d'environnement par exemple, la perception de celle-ci, issue d'une image radar à deux dimensions, risque d'être insuffisante. Dans ce cas en effet, la SER de la mine vue par le radar est nettement diminuée et la perception de la mine dans une image en dimension 2 rend mal compte de sa forme où même de son existence. Une image à trois dimensions permettrait de mieux percevoir l'objet. Pour cela, il faut passer d'un réseau d'antennes de réception linéaire à un réseau plan, à deux dimensions. Cependant, un tel réseau augmente considérablement la complexité d'un système de détection et par là même son coût.

La figure 3a présente un réseau 31 d'antennes plan. Ce réseau se déploie selon deux axes horizontaux x, z. Une antenne assurant à la fois l'émission et la réception se trouve au milieu des autres antennes 32 qui assurent la réception. Le nombre d'antennes est égal à N×M, où N est le nombre d'antennes selon l'un des deux axes x précités, et M est le nombre d'antennes selon l'autre axe z. Ce nombre d'antennes est très important. Il complique la réalisation d'un dispositif de détection. Il en augmente aussi considérablement son coût, d'une part par la complexité de réalisation, mais aussi d'autre part par le nombre d'antennes lui-même.

La figure 3b montre ce réseau placé en regard d'un objet 1 à détecter, à la distance D. Si le réseau comporte par exemple NxM antennes de réceptions, il s'ensuit que N×M mesures de signaux réfléchis par l'objet 1 vers le réseau 31 sont nécessaires.

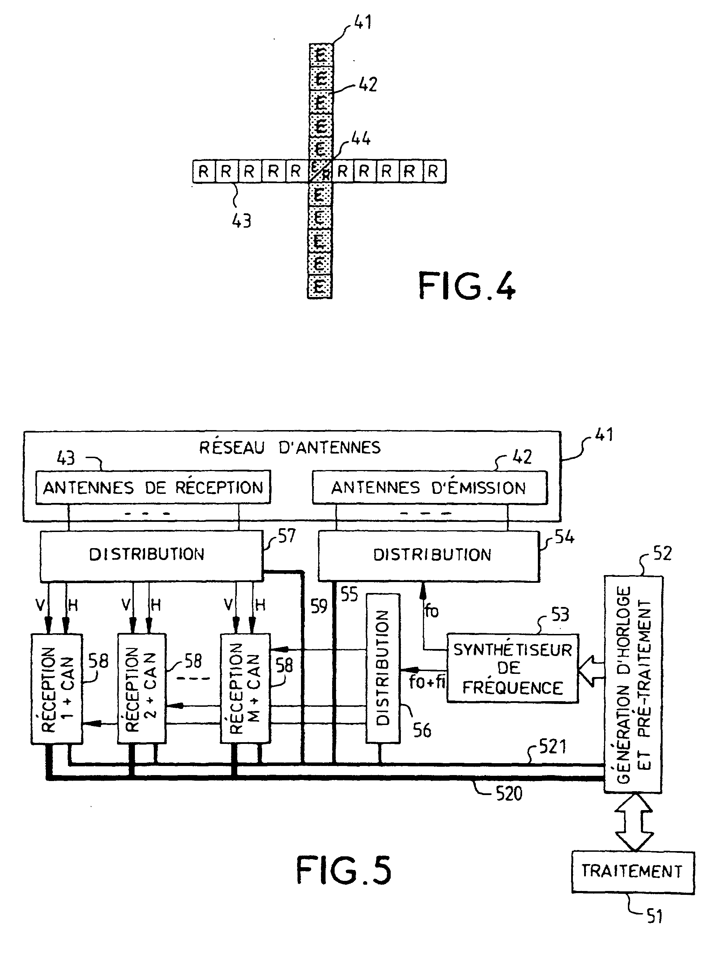

La figure 4 illustre le principe de réalisation d'un dispositif de détection selon l'invention permettant d'obtenir une image en trois dimensions d'un objet. Pour en diminuer sa complexité et donc son coût, l'invention ne prévoit pas un réseau entièrement plan, mais un réseau d'antennes en croix 41. Le dispositif comporte donc au moins un réseau 41 en croix, dont les branches sont par exemple orthogonales. Une branche 42 ne comporte que des antennes d'émission E et l'autre branche 43 ne comporte que des antennes de réception R. L'intersection des deux branches ne comporte pas d'antenne ou comporte une antenne 44 qui assure à la fois l'émission et la réception ou l'une de ces deux fonctions. Les deux branches comportent par exemple le même nombre d'antennes. Ce nombre peut être par exemple de l'ordre de 50. Les antennes d'émission E émettent chacune successivement. Les antennes de réception R captent les signaux réfléchis suite à chaque émission d'une antenne d'émission E. Ainsi, si la branche d'émission 42 comporte N antennes et la branche de réception 43 comporte M antennes, NxM mesures de signaux réfléchis par l'objet 1 vers le réseau 31 sont nécessaires. Pour une même surface de détection, le nombre de mesures est donc équivalent à celui du mode de réalisation de la figure 3. En revanche, le nombre d'antennes est nettement moins important, il est de N+M au lieu de N×M, alors que dans les deux cas la surface de détection couverte est la même. Le dispositif de détection selon l'invention permet donc l'obtention d'une image en trois dimensions avec un nombre réduit d'antennes, donc une complexité et un coût réduits. Les calculs et les expériences réalisés par la déposante ont montré que les performances de détection étaient par ailleurs équivalentes à celles de la réalisation de la figure 3. Par ailleurs, pour une détection d'une mine par exemple, où le volume d'espace à reconstituer peut être de l'ordre de 0,25 m$^3$ et cela en moins d'une seconde par exemple, il est préférable de ne pas utiliser un algorithme de reconstitution trop sophistiqué et de n'utiliser qu'un simple algorithme basé sur une reconstitution holographique. De la sorte, des objectifs de rapidité de reconstitution peuvent être atteints.

Les impulsions émises sont par exemple synthétiques. Cela permet notamment de mieux maîtriser les défauts du système de détection. Il est en effet alors aisé de jouer sur les paramètres fréquentiels de génération des signaux au niveau de processeurs qui les génèrent. De plus, cela permet au système de détection de fonctionner même en présence de pollution électromagnétique dite naturelle, par exemple celle due aux téléphones portables ou autre télécommunications, ou de pollution militaire telle que les brouilleurs par exemple, puisque cette pollution n'agit que sur quelques fréquences du spectre des impulsions. Les fréquences non polluées suffisent alors à assurer la transmission des informations nécessaires à la détection.

La figure 5 présente par un synoptique, les fonctions radar d'un détecteur selon l'invention. Un module de traitement 51, à base par exemple de microprocesseurs et de circuits associés, mesure les caractéristiques des signaux reçus et reconstitue en conséquence à l'aide d'un algorithme mémorisé, holographique par exemple, une image en trois dimensions. Lorsque l'image reconstituée indique la présence d'un objet, le module de traitement envoie un signal qui peut prendre toute forme, visuelle ou sonore. Il est encore possible d'associer à ce module des circuits d'interface et de visualisation qui permettent à un utilisateur de voir en perspective l'image reconstituée. Des moyens de transmission peuvent encore être prévus pour transmettre cette image à un poste éloigné de la zone de détection. Il est ainsi possible d'imaginer que le porteur du détecteur n'est pas un être humain mais un robot commandé à distance. Le module de traitement 51 est relié par une ligne bidirectionnelle à un module 52 de pré-traitement et de génération d'horloge. Ce dernier fournit un signal d'horloge à des moyens 53 de synthèse de fréquence ainsi qu'une valeur $f_0$ de fréquence à synthétiser. Les moyens de synthèse 53 délivrent alors un signal de fréquence $f_0$ à la branche 42 d'antennes d'émission via des moyens de distribution 54. Ces derniers comportent par exemple des circuits électroniques, bas niveau et de puissance. Les circuits électroniques bas niveau commandent notamment de façon connue l'aiguillage du signal hyperfréquence $f_0$ successivement vers chacune des antennes E de la branche 42. Cet aiguillage est par exemple piloté par le module de génération d'horloge et de pré-traitement 52 via une ligne 55. Il faut en effet synchroniser cet aiguillage avec celui des circuits de réception qui seront décrits par la suite. Les circuits électroniques de puissance des moyens de distribution permettent de leur côté d'amplifier le signal fourni par les moyens de synthèse. Un circuit d'amplification est par exemple commun à toutes les antennes d'émission. L'amplification est par exemple réalisée à base de diodes ou de transistors de puissance de façon connue de l'homme du métier. Les antennes d'émission peuvent être des modules actifs susceptibles d'effectuer un balayage électronique, dans ce cas les moyens de distribution 54 comportent des circuits de déphasage des modules actifs. Il est par ailleurs envisageable de disposer les circuits d'amplification au niveau de chaque antenne d'émission, mais une telle solution peut néanmoins s'avérer plus coûteuse. Les antennes d'émission sont par exemple à bipolarisation. Elles présentent par exemple une polarisation verticale et une polarisation horizontale, la bipolarisation permettant notamment une classification des objets, en augmentant le nombre d'informations relatives à ces derniers. Les moyens de distribution comportent alors des circuits d'aiguillage des signaux affectés à chaque polarisation.

Les moyens de synthèse 53 délivrent par ailleurs un signal de fréquence d'émission de fréquence $f_0$ augmentée d'une fréquence intermédiaire $f_i$ aux circuits de réceptions, par exemple via des deuxièmes moyens de distribution 56. Les circuits de réceptions comportent par exemple des troisièmes moyens de distribution 57 et des circuits de réception élémentaires 58 comportant notamment chacun un convertisseur analogique-numérique. Les troisièmes moyens de distribution 57, commandés via une ligne 59 par le module de pré-traitement 52, aiguillent les signaux reçus par les antennes de la branche de réception 43 vers les circuits de réception élémentaires 58. Une antenne de réception est affectée de façon biunivoque à un circuit élémentaire 58. Les antennes sont par exemple reliées aux troisièmes moyens de distribution par des lignes hyperfréquence de type coaxial. Dans le cas où les antennes sont à bipolarisation, les moyens de distribution 57 fournissent à chaque circuit de réception élémentaire 58 le signal de polarisation verticale V ou le signal de polarisation horizontale H, s'il s'agit d'une polarisation verticale et d'une polarisation horizontale. Chaque circuit élémentaire 58 comporte des moyens classiques de réception hétérodyne à base de mélangeurs, la fréquence d'émission augmentée de la fréquence intermédiaire, $f_0+f_i$, étant fournie à chaque circuit élémentaire 58 par les deuxièmes moyens de distribution 56. A l'intérieur d'un circuit élémentaire 58, les signaux de réception sont convertis numériquement puis transmis au module de pré-traitement 52 via un bus de données 520 qui relie toutes les sorties des convertisseurs analogique-numérique à ce module 52. Les signaux de réception numérisés sont ensuite traités par le module de traitement 51. En raison des fréquences de fonctionnement élevées, la fonction réception et la fonction conversion analogique-numérique des circuits de réception élémentaires 58 sont par exemple intégrés matériellement dans un même module, de façon notamment à minimiser les longueurs des connexions.

Un bus de contrôle 521 relie les lignes de commande 55, 57 des premier et troisième moyens de distribution au module de pré-traitement 52. Ce même bus de contrôle 521 relie par exemple aussi les entrées de contrôle des convertisseurs analogique-numérique au module de pré-traitement, dans le but notamment de commander l'état des sorties de ces mêmes convertisseurs sur le bus de données et l'échantillonnage des signaux de réception.

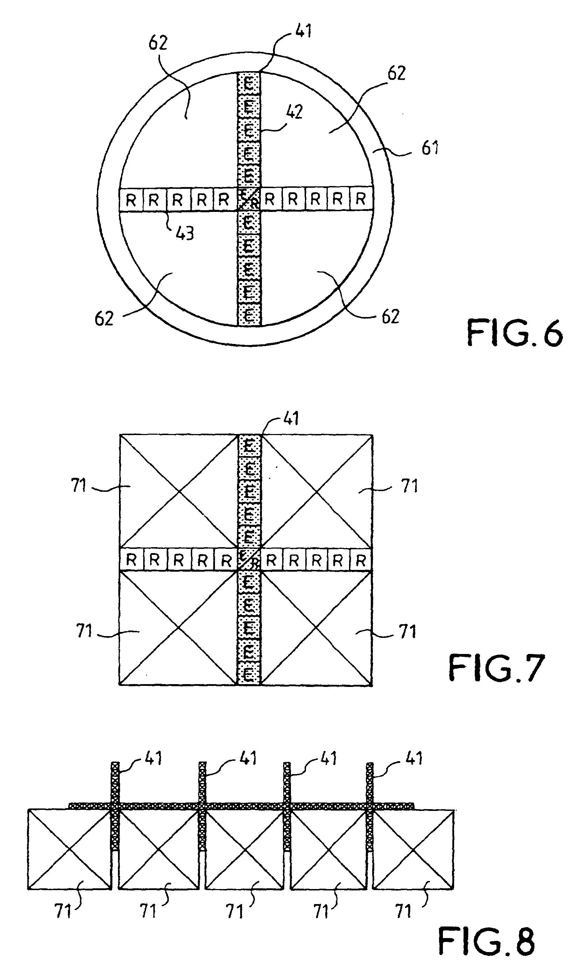

La figure 6 présente une réalisation partielle possible d'un dispositif selon l'invention, et permet de mettre en évidence au moins des avantages apportés par l'invention. Dans cet exemple de réalisation, le réseau en croix 41 est maintenu par un anneau rigide 61 permettant l'intégration éventuelle d'un détecteur magnétique. La longueur des branches 42, 43 est par exemple de l'ordre de 25 centimètres. Des moyens de liaison non représentés rendent par exemple l'anneau mécaniquement solidaire d'un manche ou de tout autre moyen de transport. Les circuits électroniques étant éloignés du réseau d'antennes, des lignes souples de type coaxial véhiculent par exemple les signaux hyperfréquence entre ces deux ensembles.

Le réseau en croix 41 laisse des espaces libres 62 entre ses branches 42, 43 qui permettent à un utilisateur de mieux appréhender le terrain. Dans le cas de détection de mines et avec par exemple un dispositif de détection selon la figure 3a, la zone de détection est masquée pour l'opérateur. Or, pour des raisons techniques mais aussi, et ce n'est pas à négliger pour les opérations en cause, pour des raisons d'ordre psychologique, les opérateurs ont besoin de voir la partie de terrain soumise à détection. La vision de cette partie de terrain complète en effet la détection électronique effectuée par le dispositif. Pour des opérateurs experts dans le domaine de la détection, notamment de mines, la vision du sol peut apporter des informations non négligeables qui peuvent avantageusement contribuer à accroître le taux de détection global. Par ailleurs, les espaces libres 62 sont synonymes de gain de poids, ce qui est un avantage important pour des opérateurs qui doivent porter le dispositif pendant des temps qui peuvent être longs.

La figure 7 illustre un autre mode de réalisation possible d'un dispositif selon l'invention, permettant notamment d'accroître la bande de fréquences utilisée. Un ou plusieurs des espaces libres précités, entre les branches du réseau, sont utilisés pour placer une antenne supplémentaire 71 plus volumineuse. Dans l'exemple de réalisation de la figure 7, les quatre espaces libres sont tous occupés par une antenne supplémentaire. Il est possible de prévoir des modes de réalisation n'utilisant qu'une, deux ou trois antennes 71, de façon notamment à laisser un espace de vision du sol soumis à détection. Les antennes supplémentaires, plus volumineuses, permettent notamment d'accroître la bande de détection vers les fréquences basses, par exemple entre 0,4 GHz et 2 Ghz, alors que le réseau en croix présente par exemple une bande de détection de 2 GHz à environ 12 GHz. Le dispositif selon l'invention possède donc deux réseaux d'antennes à bandes de fréquences disjointes dont la complémentarité permet d'obtenir une bande globale importante, par exemple de 0,4 GHz à 12 Ghz. Les fréquences basses permettent notamment de détecter des objets relativement plus profondément enfouis et plus volumineux que les mines antipersonnel par exemple, tels que des mines antichars ou des obus qui n'ont pas explosé. Grâce à une large bande de fréquences de détection, le dispositif selon l'invention peut donc alors permettre la détection d'une grande variété d'objets.

La figure 8 présente un autre exemple de réalisation possible d'un dispositif selon l'invention qui comporte au moins deux réseaux en croix 41. Dans cet exemple de réalisation, le dispositif comporte quatre réseaux en croix 41 alignés. Cinq antennes supplémentaires 71 occupent par exemple les espaces entre branches. Ces antennes sont de dimensions supérieures à celles de la figure 7 puisque leur largeur correspond sensiblement à la longueur d'une branche au lieu d'une demie branche environ. Cela permet notamment d'accroître encore la bande supplémentaire vers les fréquences basses et donc d'accroître la bande de détection globale du dispositif. L'assemblage de plusieurs réseaux permet notamment d'augmenter la surface de détection du dispositif. Le dispositif peut par exemple alors être disposé à l'avant d'un véhicule.

L'invention s'applique notamment à la détection de mines, mais elle peut en fait s'appliquer à la détection de tous types d'objets enfouis, dans le sol ou ailleurs, pourvu qu'ils puissent être détectés par des ondes électromagnétiques.

**Revendications**

1. Dispositif de détection d'objets enfouis, **caractérisé en ce qu'**il comporte au moins un réseau d'antennes en croix (41), une branche (42) ne comportant que des antennes d'émission (E) et une branche (43) ne comportant que des antennes de réception (R), les antennes d'émission émettant successivement et les antennes de réception captant les signaux réfléchis par un objet (1) après chaque émission d'une antenne, pour former une image en trois dimensions de l'objet (1).

2. Dispositif selon la revendication 1, **caractérisé en ce qu'**il comporte un module de traitement (51) raitant les signaux reçus pour reconstituer une image selon un algorithme holographique.

3. Dispositif selon l'une quelconque des revendications précédentes, **caractérisé en ce que** les impulsions hyperfréquence qu'il émet sont synthétiques.

4. Dispositif selon l'une quelconque des revendications précédentes, **caractérisé en ce que** les antennes sont à bipolarisation.

**5.** Dispositif selon la revendication 4, **caractérisé en ce que** les antennes présentent une polarisation verticale (V) et une polarisation horizontale (H)

**6.** Dispositif selon l'une quelconque des revendications précédentes, **caractérisé en ce que** son module de traitement (51) est relié par une ligne bidirectionnelle à un module (52) de pré-traitement et de génération d'horloge, fournissant un signal d'horloge à des moyens de synthèse de fréquence (53) qui délivrent un signal hyperfréquence ($f_0$) à la branche d'antennes d'émission (42) via des moyens de distribution (54).

**7.** Dispositif selon la revendication 6, **caractérisé en ce que** les moyens de distribution (54) comportent des circuits électroniques bas niveau et de puissance, les circuits électroniques bas niveau commandant l'aiguillage du signal hyperfréquence ($f_0$) successivement vers chacune des antennes (E) de la branche (42), cet aiguillage étant piloté par le module de génération d'horloge et de pré-traitement (52) via une ligne (55, 521).

**8.** Dispositif selon l'une quelconque des revendications 6 ou 7, **caractérisé en ce que** les moyens de synthèse (53) délivrent aux circuits de réception, un signal de fréquence d'émission ($f_0$) augmentée d'une fréquence intermédiaire ($f_i$).

**9.** Dispositif selon la revendication 8, **caractérisé en ce que** les circuits de réception comportent des moyens de distribution (57) et des circuits de réception élémentaires (58) comportant chacun un convertisseur analogique-numérique, les moyens de distribution (57), commandé via une ligne (59, 521) par le module de pré-traitement (52), aiguillant les signaux reçus par les antennes de la branche de réception (43) vers les circuits de réception élémentaires (58), une antenne de réception étant affectée de façon biunivoque à un circuit élémentaire (58).

**10.** Dispositif selon l'une quelconque des revendications précédentes, **caractérisé en ce** le réseau en croix (41) est maintenu par un anneau rigide (61).

**11.** Dispositif selon l'une quelconque des revendications précédentes, **caractérisé en ce qu'**au moins une antenne supplémentaire (71) est disposée entre les branches (42, 43) du réseau (41) pour accroître la bande de détection globale.

**12.** Dispositif selon l'une quelconque des revendications précédentes, **caractérisé en ce qu'**il comporte plusieurs réseaux en croix (41) alignés.

**13.** Dispositif selon l'une quelconque des revendications précédentes, **caractérisé en ce que** les branches (42, 43) d'un réseau (41) sont orthogonales.

**14.** Dispositif selon l'une quelconque des revendications précédentes, **caractérisé en ce qu'**un réseau (41) comporte le même nombre d'antennes d'émission (E) et de réception (R).

**15.** Dispositif selon l'une quelconque des revendications précédentes, **caractérisé en ce que** l'objet (1) est une mine.

**Claims**

**1.** Device for detecting concealed objects, **characterized in that** it comprises at least one cross-like antenna array (41), a branch (42) comprising only transmission antennas (E) and a branch (43) comprising only reception antennas (R), the transmission antennas transmitting successively and the reception antennas picking up the signals reflected by an object (1) after each transmission from an antenna, so as to form a three-dimensional image of the object (1).

**2.** Device according to Claim 1, **characterized in that** it comprises a processing module (51) processing the signals received so as to reconstruct an image according to a holographic algorithm.

**3.** Device according to any one of the preceding claims, **characterized in that** the RF frequency pulses that it transmits are synthetic.

**4.** Device according to any one of the preceding claims, **characterized in that** the antennas are dual-polarization.

**5.** Device according to Claim 4, **characterized in that** the antennas exhibit a vertical polarization (V) and a horizontal polarization (H).

**6.** Device according to any one of the preceding claims, **characterized in that** its processing module (51) is linked by a bidirectional line to a preprocessing and clock-generation module (52), providing a clock signal to frequency synthesis means (53) which deliver a RF frequency signal ($f_0$) to the transmission antennas branch (42) via distribution means (54).

**7.** Device according to Claim 6, **characterized in that** the distribution means (54) comprise low-level and power electronic circuits, the low-level electronic circuits controlling the steering of the RF frequency signal ($f_0$) successively to each of the antennas (E) of the branch (42), this steering being driven by the clock-generation and preprocessing module (52) via a line (55, 521).

8. Device according to any one of Claims 6 or 7, **characterized in that** synthesis means (53) deliver to the reception circuits, a signal of transmission frequency ($f_0$) increased by an intermediate frequency ($f_i$).

9. Device according to Claim 8, **characterized in that** the reception circuits comprise distribution means (57) and elementary reception circuits (58) each comprising an analogue/digital converter, the distribution means (57), controlled via a line (59, 521) by the preprocessing module (52), steering the signals received by the antennas of the reception branch (43) to the elementary reception circuits (58), a reception antenna being assigned in a one-to-one manner to an elementary circuit (58).

10. Device according to any one of the preceding claims, **characterized in that** the cross-like array (41) is held by a rigid annulus (61).

11. Device according to any one of the preceding claims, **characterized in that** at least one additional antenna (71) is arranged between the branches (42, 43) of the array (41) so as to increase the overall detection band.

12. Device according to any one of the preceding claims, **characterized in that** it comprises several aligned cross-like arrays (41).

13. Device according to any one of the preceding claims, **characterized in that** the branches (42, 43) of an array (41) are orthogonal.

14. Device according to any one of the preceding claims, **characterized in that** an array (41) comprises the same number of transmission (E) and reception (R) antennas.

15. Device according to any one of the preceding claims, **characterized in that** the object (1) is a mine.

**Patentansprüche**

1. Vorrichtung zum Aufspüren vergrabener Gegenstände, **dadurch gekennzeichnet, dass** sie mindestens ein kreuzförmiges Antennennetz (41) aufweist, von dem ein Zweig (42) nur Sendeantennen (E) und ein Zweig (43) nur Empfangsantennen (R) enthält, wobei die Sendeantennen nacheinander senden und die Empfangsantennen die von einem Gegenstand (1) reflektierten Signale nach jedem Sendevorgang einer Antenne empfangen, um ein dreidimensionales Bild des Gegenstands (1) zu bilden.

2. Vorrichtung nach Anspruch 1, **dadurch gekennzeichnet, dass** sie einen Verarbeitungsmodul (51) aufweist, der die empfangenen Signale verarbeitet, um ein Bild gemäß einem holographischen Algorithmus wiederherzustellen.

3. Vorrichtung nach einem der vorhergehenden Ansprüche, **dadurch gekennzeichnet, dass** die von ihr gesendeten Höchstfrequenzimpulse synthetisch sind.

4. Vorrichtung nach einem der vorhergehenden Ansprüche, **dadurch gekennzeichnet, dass** die Antennen zweipolig sind.

5. Vorrichtung nach Anspruch 4, **dadurch gekennzeichnet, dass** die Antennen eine senkrechte Polarisierung (V) und eine waagerechte Polarisierung (H) aufweisen.

6. Vorrichtung nach einem der vorhergehenden Ansprüche, **dadurch gekennzeichnet, dass** ihr Verarbeitungsmodul (51) über eine bidirektionale Leitung mit einem Vorverarbeitungs- und Takterzeugungsmodul (52) verbunden ist, der ein Taktsignal an Frequenzsynthesemittel (53) liefert, die über Verteilermittel (54) ein Höchstfrequenzsignal ($f_0$) an den Sendeantennenzweig (42) liefern.

7. Vorrichtung nach Anspruch 6, **dadurch gekennzeichnet, dass** die Verteilermittel (54) niederpeglige und Leistungs-Elektronikschaltungen aufweisen, wobei die niederpegligen Elektronikschaltungen das Leiten des Höchstfrequenzsignals ($f_0$) nacheinander zu jeder der Antennen (E) des Zweigs (42) steuern, wobei dieses Leiten über eine Leitung (55, 521) vom Takterzeugungs- und Vorverarbeitungsmodul (52) gesteuert wird.

8. Vorrichtung nach einem der Ansprüche 6 oder 7, **dadurch gekennzeichnet, dass** die Synthesemittel (53) ein um eine Zwischenfrequenz ($f_i$) erhöhtes Sendefrequenzsignal ($f_0$) an die Empfangsschaltungen senden.

9. Vorrichtung nach Anspruch 8, **dadurch gekennzeichnet, dass** die Empfangsschaltungen Verteilermittel (57) und Elementar-Empfangsschaltungen (58) aufweisen, die je einen Analog-Digital-Wandler enthalten, wobei die über eine Leitung (59, 521) vom Vorverarbeitungsmodul (52) gesteuerten Verteilermittel (57) die von den Antennen des Empfangszweigs (43) empfangenen Signale zu den Elementar-Empfangsschaltungen (58) leiten, wobei eine Empfangsantenne einer Elementarschaltung (58) eineindeutig zugeordnet ist.

**10.** Vorrichtung nach einem der vorhergehenden Ansprüche, **dadurch gekennzeichnet, dass** das kreuzförmige Netz (41) von einem steifen Ring (61) gehalten wird.

**11.** Vorrichtung nach einem der vorhergehenden Ansprüche, **dadurch gekennzeichnet, dass** mindestens eine zusätzliche Antenne (71) zwischen den Zweigen (42, 43) des Netzes (41) angeordnet ist, um den globalen Erfassungsbereich zu vergrößern.

**12.** Vorrichtung nach einem der vorhergehenden Ansprüche, **dadurch gekennzeichnet, dass** sie mehrere fluchtende kreuzförmige Netze (41) aufweist.

**13.** Vorrichtung nach einem der vorhergehenden Ansprüche, **dadurch gekennzeichnet, dass** die Zweige (42, 43) eines Netzes (41) orthogonal sind.

**14.** Vorrichtung nach einem der vorhergehenden Ansprüche, **dadurch gekennzeichnet, dass** ein Netz (41) die gleiche Anzahl von Sendeantennen (E) und Empfangsantennen (R) enthält.

**15.** Vorrichtung nach einem der vorhergehenden Ansprüche, **dadurch gekennzeichnet, dass** der Gegenstand (1) eine Mine ist.

EP 0 919 833 B1

AE AR AE AR AE AR AE AR AE AR AE AR

$h_{sol}$

dx

1

2

# FIG.1

FIG.2

FIG.3a

FIG.3b

EP 0 919 833 B1

FIG.4

FIG.5

11

FIG.6

FIG.7

FIG.8